# EUROPÄISCHE PATENTSCHRIFT

(11) **EP 0 901 437 B1**
(45) Veröffentlichungstag und Bekanntmachung des Hinweises auf die Patenterteilung: **27.09.2000**
(21) Anmeldenummer: 97925928.0
(22) Anmeldetag: 20.05.1997
(51) Int. Cl.: B60T 8/00

(54) **VERFAHREN ZUR ELEKTRONISCHEN BREMSKRAFTVERTEILUNG**
ELECTRONIC BRAKING-FORCE-DISTRIBUTION METHOD
PROCEDE DE REPARTITION ELECTRONIQUE DE LA FORCE DE FREINAGE

(30) Priorität: 22.05.1996 DE 19620583
(43) Veröffentlichungstag der Anmeldung: 17.03.1999
(73) Patentinhaber: Continental Teves AG & Co. oHG, 60488 Frankfurt (DE)
(72) Erfinder: EHMER, Norbert, D-65760 Eschborn (DE); PRÖGER, Thomas, D-63322 Rödermark 1 (DE); ZENZEN, Markus, D-65795 Hattersheim 2 (DE)
(74) Vertreter: Blum, Klaus-Dieter, Dipl.-Ing.
(86) Internationale Anmeldenummer: EP9702559
(87) Internationale Veröffentlichungsnummer: WO9744223

(56) Entgegenhaltungen:
- DE-A- 4 224 971
- DE-A- 4 414 980
- DE-A- 4 417 935
- FR-A- 2 544 268

## Beschreibung

Die vorliegende Erfindung betrifft ein Verfahren zur elektronischen Bremskraftverteilung gemäß dem Oberbegriff des Anspruchs 1 wie z.B. aus DE-A-4 414 980 bekannt ist. Eine elektronische Bremskraftverteilung wird zu dem Zwecke vorgenommen, daß die Hinterräder unter keinen Umständen vor den Vorderrädern blockieren sollen. Bei Bedarf wird daher der Bremsdruck der Hinterräder durch entsprechende Ventilschaltung gehalten oder im weiteren Verlauf sogar abgesenkt, um einen erhöhten Bremsschlupf nicht weiter ansteigen zu lassen bzw. ihn abzusenken. Fahrzeuge mit einer Vorderachs-Hinterachs-Bremskreisaufteilung weisen im Vorderachsbremskreis in der Regel einen Druckschalter auf, welcher die Aufgabe hat, bei einem Bremskreisausfall an der Vorderachse sicherzustellen, daß eine elektronische Bremskraftverteilung an der Hinterachse nicht dazu führt, daß das Fahrzeug eine zu geringe Verzögerung beim Bremsen erfährt. Es gibt nämlich eine Richtlinie, welche mindestens 30 % Fahrzeugverzögerung bei Ausfall eines Bremskreises fordert. In der Regel ist es so, daß ein Druckschalter ohne anstehenden Vorderachsbremsdruck geschlossen ist. Eine elektronische Bremskraftverteilung ist dann nur möglich, wenn der Druckschalter geöffnet ist, weil dies auf einen Druckaufbau im Vorderachs-Bremskreis schließen läßt. Unabhängig von der genauen Funktion des Druckschalters wird auf jeden Fall dann eine elektronische Bremskraftverteilung ausgeschaltet, wenn ein defekter Vorderachs-Bremskreis erkannt wird.

Im Falle eines Defektes am Druckschalter ist aber eine Überwachung des Vorderachs-Bremsdruckes nicht möglich. Der elektronische Regler im Fahrzeug weiß also nicht, ob ein ordnungsgemäßer Vorderachsbremsdruck aufgebaut wird oder nicht, ob also eine elektronische Bremskraftverteilung möglich ist oder nicht. Es könnte ja entweder nur der Druckschalter defekt sein und der Vorderachs-Bremskreis intakt, oder es könnte auch ein sogenannter Doppelfehler aufgetreten sein, daß nämlich bei defektem Druckschalter der Vorderachsbremskreis ausgefallen ist.

Die Aufgabe der vorliegenden Erfindung besteht darin, ein Verfahren zur elektronischen Bremskraftverteilung gemäß dem Oberbegriff des Anspruchs 1 anzugeben, welches auch bei defektem Druckschalter zur Erhöhung der Fahrzeugstabilität beiträgt.

Diese Aufgabe wird gelöst in Verbindung mit den kennzeichnenden Merkmalen des Anspruchs 1. Das Prinzip der Erfindung liegt darin, die elektronische Bremskraftverteilung unempfindlicher zu machen. Ein Eintritt in die elektronische Bremskraftverteilung ist nur möglich, wenn die Richtlinien zur Mindestfahrzeugverzögerung bei Bremskreisausfall bereits eingehalten sind.

Dies kann das einzige Kriterium sein, da bei einer derartigen Verzögerung in der Regel ohnehin davon ausgegangen werden muß, daß das Bremspedal betätigt ist. Andere Eintrittskriterien sind also nicht unbedingt notwendig.

Es können aber auch zusätzlich noch andere Kriterien abgefragt werden, beispielsweise der errechnete Bremsschlupf an den Hinterrädern.

Als Verzögerungsschwelle, welche für den Eintritt in die elektronische Bremskraftverteilung überschritten sein muß, empfiehlt sich eine Verzögerung, welche größer ist als 0,35 g, insbesondere 0,45 g. Das Kriterium, den Hinterachsbremsdruck dem Hauptzylinderbremsdruck wieder anzupassen, können entweder dieselben sein, welche für den Eintritt in die elektronische Bremskraftverteilung gelten. Es können aber auch niedrigere Verzögerungsschwellen eingesetzt werden. Ein direkter Austritt aus der elektronischen Bremskraftverteilung ist deshalb zu vermeiden, weil eine plötzliche Beaufschlagung der Hinterachsbremsen mit dem vollen Bremsdruck unter Umständen zu einem Blockieren der Hinterradbremsen führen könnte.

Als einfachste Maßnahme zur Angleichung des Hinterachsbremsdruckes an den Hauptzylinderbremsdruck bietet sich eine Druckaufbauphase mit Druckaufbaupulsen an. Die Einlaßventile der Radbremsen werden also gepulst geschaltet, wobei mit jedem Öffnen des Ventils ein kleiner Bremsdruckanstieg zu vermerken ist.

Erst anschließend erfolgt ein Austritt aus der elektronischen Bremskraftverteilung, sofern nicht zugleich die Eintrittskriterien in die elektronische Bremskraftverteilung erfüllt sind.

Zum Beispiel kann also als einziges Eintrittskriterium in die elektronische Bremskraftverteilung die Überschreitung einer Verzögerungsschwelle von 0,45 g gewählt werden und als Schwelle zum Schalten von Druckaufbaupulsen eine Verzögerungsschwelle von 0,35 g. Der Ablauf einer elektronischen Bremskraftverteilung ist also folgender: Ungeachtet einer detektierten Bremsbetätigung, beispielsweise durch einen Bremslichtschalter, setzt eine elektronische Bremskraftverteilung immer ein, wenn das Fahrzeug stärker als 0,45 g verzögert. Zunächst wird eine Druckhaltephase eingeleitet und bei Blockiergefahr eine Druckabbauphase. Die Regelung läuft so lange ab, bis das Fahrzeug eine geringere Fahrzeugverzögerung aufweist. Wenn die Verzögerung kleiner wird als 0,35 g, so wird ein Druckaufbaupulsraster gestartet, das nach Angleich des Hinterachsbremsdruckes an den anstehenden Hauptzylinderdruck zum Austritt aus der elektronischen Bremskraftverteilung führt.

Es kann entweder erst nach dem Austritt überprüft werden, ob durch die Erhöhung des Hinterachsbremsdruckes die Eintrittsschwelle für die elektronische Bremskraftverteilung wieder überschritten wurde. Es kann aber auch alternativ der Austritt erst dann erfolgen, wenn nach Anpassung des Hinterachsbremsdruckes die Eintrittskriterien überprüft worden und nicht erfüllt worden sind.

## Patentansprüche

1. Verfahren zur elektronischen Bremskraftverteilung an Fahrzeugen mit hydraulischer Bremsanlage mit einem pedalbetätigten Bremsdruckgeber und mit einer Vorderachs-Hinterachs-Bremskreisaufteilung, welches den Hinterachsbremsdruck mit der Zielsetzung regelt, ein Blockieren der Hinterräder vor den Vorderrädern zu verhindern, wobei Druckhalte-, Druckabbau- und Druckaufbauphasen vorgesehen sind, und mit einem Druckschalter zur Erkennung von Bremsdruck im Vorderachs-bremskreis, dadurch **gekennzeichnet,** daß bei bei defektem Druckschalter und/oder bei Ausfall des Vorderachs-Bremskreises nur dann eine elektronische Bremskraftverteilung eingeleitet wird, wenn die Fahrzeugverzögerung zur Einhaltung einer vorgegebenen Mindestverzögerung bei Bremskreisausfall ausreicht.

2. Verfahren nach Anspruch 1, dadurch **gekennzeichnet,** daß weitere, aus dem Drehverhalten der Fahrzeugräder abgeleitete Bedingungen zusätzlich für einen Eintritt in eine elektronische Bremskraftverteilung erfüllt sein müssen.

3. Verfahren nach Anspruch 1 oder 2, dadurch **gekennzeichnet,** daß als notwendiges Kriterium für den Eintritt in eine elektronische Bremskraftverteilung die Überschreitung einer Fahrzeugverzögerungsschwelle von mindestens Zₐ = a * g mit a ≥ 0,35 angesetzt wird.

4. Verfahren nach Anspruch 3, dadurch **gekennzeichnet,** daß zumindest immer dann, wenn die Fahrzeugverzögerung kleiner wird als Z_{b} = b * g mit 0,3 ≤ b ≤ a, der Hinterachs-Bremsdruck dem Bremsdruckgeberdruck angepaßt wird.

5. Verfahren nach Anspruch 4, dadurch **gekennzeichnet**, daß die Anpassung durch Druckaufbauphasen mit Druckaufbaupulsen erfolgt.

6. Verfahren nach Anspruch 4 oder 5, dadurch **gekennzeichnet,** daß nach der Anpassung ein Austritt aus der elektronischen Bremskraftverteilung erfolgt, sofern nicht hinreichende Bedingungen für einen Eintritt erfüllt sind.

## Claims

1. Method of electronic brake force distribution on vehicles with a hydraulic brake system equipped with a pedaloperated brake pressure generator and a front-axle/rear-axle brake circuit allotment, which controls the rear-axle brake pressure with the objective of preventing the rear wheels from locking before the front wheels do, wherein pressure maintenance, pressure reduction and pressure increase phases are provided, and including a pressure switch to identify brake pressure in the front-axle brake circuit,
**characterized** in that when the pressure switch is defective and/or the front-axle brake circuit fails, electronic brake force distribution is initiated only if the vehicle deceleration is sufficient to satisfy standards with respect to minimum deceleration upon brake circuit failure.

2. Method as claimed in claim 1,
**characterized** in that further conditions, derived from the rotational behavior of the vehicle wheels, must additionally be satisfied for an activation of electronic brake force distribution.

3. Method as claimed in claim 1 or claim 2,
**characterized** in that the exceeding of a vehicle deceleration threshold of at least Zₐ = a * g, with a ≥ 0.35, is set as a necessary criterion for the activation of electronic brake force distribution.

4. Method as claimed in claim 3,
**characterized** in that the rear-axle brake pressure is adapted to the pressure of the brake pressure generator at least when the vehicle deceleration becomes lower than Z_{b} = b * g, with 0.3 ≤ b ≤ a.

5. Method as claimed in claim 4,
**characterized** in that an adaption is made by pressure increase phases with pressure increase pulses.

6. Method as claimed in claim 4 or claim 5,
**characterized** in that after the adaption is made the electronic brake force distribution is deactivated unless sufficient conditions for its activation are satisfied.

## Revendications

1. Procédé de répartition électronique de force de freinage sur un véhicule comprenant un système de freinage hydraulique comportant un générateur de pression de frein actionné par pédale et comportant une division du circuit de freinage essieu avant-essieu arrière, qui réalise une régulation de la pression de frein d'essieu arrière dans le but d'éviter un blocage des roues arrière avant les roues avant, des phases de maintien de pression, de suppression de pression et d'établissement de pression étant prévues, et comportant un interrupteur à pression servant à constater la pression de frein dans le circuit de freinage d'essieu avant, caractérisé en ce que, dans le cas d'un interrupteur à pression défectueux et/ou dans le cas d'une défaillance du circuit de frein d'essieu avant, une répartition électronique de force de freinage n'est engagée que lorsque la décélération du véhicule suffit pour maintenir une décélération minimale préfixée en cas de défaillance de circuit de freinage.

2. Procédé suivant la revendication 1, caractérisé en ce que d'autres conditions déduites du comportement de rotation des roues du véhicule doivent être remplies en supplément pour une entrée dans une répartition électronique de force de freinage.

3. Procédé suivant la revendication 1 ou 2, caractérisé en ce que le dépassement d'un seuil de décélération de véhicule d'au moins Zₐ = a * g avec a ≥ 0,35 est fixé en tant que critère nécessaire pour l'entrée dans une répartition électronique de force de freinage.

4. Procédé suivant la revendication 3, caractérisé en ce que la pression de frein d'essieu arrière est adaptée à la pression de générateur de pression de frein au moins chaque fois que la décélération du véhicule est inférieure à Z_{b} = b * g avec 0,3 ≤ b ≤ a.

5. Procédé suivant la revendication 4, caractérisé en ce que l'adaptation s'effectue au moyen de phases d'établissement de pression comportant des impulsions d'établissement de pression.

6. Procédé suivant la revendication 4 ou 5, caractérisé en ce qu'après l'adaptation, une sortie de la répartition électronique de force de freinage a lieu dans la mesure où des conditions suffisantes pour une entrée ne sont pas remplies.
